(19) Europäisches Patentamt / European Patent Office / Office européen des brevets

(11) **EP 3 073 205 B1**

(12) **EUROPEAN PATENT SPECIFICATION**

(45) Date of publication and mention of the grant of the patent:
**22.07.2020 Bulletin 2020/30**

(51) Int Cl.:
**F24F 11/00** (2018.01)      **F24D 19/10** (2006.01)
**G05D 23/19** (2006.01)

(21) Application number: **15161449.2**

(22) Date of filing: **27.03.2015**

(54) **Method for operating a hydronic heating and/or cooling system, control valve and hydronic heating and/or cooling system**

VERFAHREN ZUM BETREIBEN EINES HYDRONISCHEN HEIZ- UND/ODER KÜHLSYSTEMS, REGELVENTIL UND HYDRONISCHES HEIZ- UND/ODER KÜHLSYSTEM

PROCÉDÉ POUR FAIRE FONCTIONNER UN SYSTÈME DE REFROIDISSEMENT ET/OU DE CHAUFFAGE HYDRONIQUE, VANNE DE RÉGULATION ET SYSTÈME DE CHAUFFAGE ET/OU DE REFROIDISSEMENT HYDRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.09.2016 Bulletin 2016/39**

(73) Proprietor: **Honeywell Technologies Sarl**
**1180 Rolle (CH)**

(72) Inventors:
- **Trnka, Pavel**
  **15500 Prague (CZ)**
- **Dostál, Jiri**
  **56501 Chocen (CZ)**
- **Prajzner, Vaclav**
  **63800 Brno, Kraj Jihomoravsky (CZ)**
- **Havlena, Vladimir**
  **182 00 Prague 8 (CZ)**

(74) Representative: **Sturm, Christoph**
**Quermann - Sturm - Weilnau**
**Patentanwälte Partnerschaft mbB**
**Unter den Eichen 5**
**65195 Wiesbaden (DE)**

(56) References cited:
EP-A1- 2 466 220      JP-A- H0 229 558
US-A1- 2009 218 088      US-A1- 2009 314 484
US-A1- 2013 240 172

**Description**

The disclosure relates to a method for operating a hydronic heating and/or cooling system. Further on, the present disclosure relates to a control valve for a hydronic heating and/or cooling system and to a hydronic heating and/or cooling system.

A hydronic heating and/or cooling system transfers heat/cold from a source like a boiler or a chiller to at least one temperature zone for which the respective zone air temperature needs to be controlled. Each temperature zone comprises a heat exchanger. The respective heat exchanger comprises a piping with a liquid heating/cooling medium flowing through the piping of the heat exchanger and with air flowing around the piping of the heat exchanger. Both, the liquid heating/cooling medium and the air flow thorough the respective heat exchanger. Each temperature zone further comprises a temperature sensor for measuring an actual value of a zone air temperature to be controlled. Each temperature zone further comprises a control valve. The respective control valve controls the flow of the liquid heating/cooling medium through the respective heat exchanger in such a way that the actual value of the zone air temperature is adjusted to a target value of the zone air temperature. Each temperature zone may optionally comprise a fan for blowing the air through the respective heat exchanger. A unit of a hydronic heating and/or cooling system comprising a heat exchanger and a fan is often called fan-coil-unit.

A hydronic heating and/or cooling system comprises several of such temperature zones. In a properly balanced heating and/or cooling system the temperature zone being hydraulically most remote from the heat/cool source, namely the heat exchanger of the hydraulically most remote temperature zone, always gets some minimum flow of the liquid heating/cooling medium even if all other temperature zones require maximum flow of the liquid heating and/or cooling medium though the respective heat exchanger. This requires that all temperature zones and thereby all heat exchangers avoid an overflow of the liquid heating/cooling medium, which is a state where the heat exchanger of the respective temperature zone has an excessive flow so that the same is not able to efficiently use the heat/cool content of the liquid heating/cooling medium.

A controller typically adjusts the valve position of the control valve of each temperature zone to modulate the flow of the liquid heating/cooling medium in order to deliver a flow required to reach and maintain a target air temperature at the respective temperature zone. The control valves of the various temperature zones of the hydronic heating and/or cooling system are interacting, i.e. a change of the control valve position on one temperature zone influences pressures and flows of the liquid heating/cooling medium in adjacent temperature zones. These interactions cause temperature fluctuations when simple thermostatic controllers are used.

Current solutions for such overflow avoidance and pressure independent valve control use mechanical devices with membranes, springs and the like. These devices have a complicated mechanical construction being sensitive to operating conditions and are therefore not reliable enough. Other current solutions use electronic flow meters. However, a flow meter is an expensive component, which limits an acceptance of such a solution.

There is a need to provide overflow avoidance and pressure independent valve control in a hydronic heating and/or cooling system in a more simple, cost-effective and reliable way.

US 2009/218088 A1 discloses a regulating device which uses flow sensors and temperature sensors to determine heating power. The document discloses a method according to the preamble of claim 1 and a control valve according to the preamble of claim 6, respectively.

The method for operating a hydronic heating and/or cooling system is defined in claim 1.

A difference between the actual value and the target value of the respective zone air temperature is provided to a first controller, wherein the first controller provides as output variable a signal corresponding to a target relative heating/cooling power request of the heat exchanger of the respective temperature zone. An corresponding actual relative heating/cooling power request for the respective heat exchanger is calculated on basis of at least three temperature signals, namely at least on basis of the heat exchanger inlet temperature of the liquid heating/cooling medium, on basis of the heat exchanger outlet temperature of the liquid heating/cooling medium and on basis of the heat exchanger inlet air temperature which corresponds to the actual value of the zone air temperature. A difference between the target relative heating/cooling power request and the actual relative heating/cooling power request is provided to a second controller, wherein the second controller provides as output variable at least one control variable for the respective temperature zone. The method provides overflow avoidance and pressure independent valve control in a hydronic heating and/or cooling system in a simple, cost-effective and reliable way.

According to the present invention, the second controller provides as output variable at least a control variable for the control valve of the respective temperature zone, namely a valve position for the respective control valve. If the temperature zone further comprises a fan for blowing the air through the respective heat exchanger, the second controller provides as further output variable a control variable for the fan of the respective temperature zone, namely a fan sped for the respective fan. The method provides overflow avoidance and pressure independent valve control in a hydronic heating and/or cooling system in a simple, cost-effective and reliable way.

Preferably, the actual relative heating/cooling power request p(t) for the respective heat exchanger is calculated on basis the heat exchanger inlet temperature of the liquid medium, on basis of the heat exchanger outlet temperature of the liquid medium and on basis of the heat exchanger inlet air temperature using the following formula:

$$\rho(t) = \frac{T_{wo}(t) - T_{ai}(t)}{T_{wi}(t) - T_{ai}(t)}$$

wherein $T_{wi}$ is the heat exchanger inlet temperature of the liquid medium, wherein $T_{wo}$ is the heat exchanger outlet temperature of the liquid medium, and wherein $T_{ai}$ is the heat exchanger inlet air temperature that corresponds to the actual value of the zone air temperature. Three temperature signals are sufficient when using this approach.

Alternatively, the actual relative heating/cooling power request $\xi(t)$ for the respective heat exchanger is calculated on basis of the heat exchanger inlet temperature of the liquid medium, on basis of the heat exchanger outlet temperature of the liquid medium, on basis of the heat exchanger inlet air temperature and on basis of the heat exchanger outlet air temperature using the following formula:

$$\xi(t) = \frac{T_{ao}(t) + T_{wo}(t) - 2T_{ai}(t)}{2(T_{wi}(t) - T_{ai}(t))}$$

wherein $T_{wi}$ is the heat exchanger inlet temperature of the liquid medium, wherein $T_{wo}$ is the heat exchanger outlet temperature of the liquid medium, wherein $T_{ai}$ is the heat exchanger inlet air temperature that corresponds to the actual value of the zone air temperature, and wherein $T_{ao}$ is the heat exchanger outlet air temperature. This approach requires four temperature signals.

The control valve according to the present disclosure is defined in claim 6 and the hydronic heating and/or cooling system according to the present disclosure is defined in claim 10.

Preferred developments of the invention are provided by the dependent claims and the description which follows. Exemplary embodiments are explained in more detail on the basis of the drawing, in which:

Figure 1      shows a temperature zone of a hydronic heating and/or cooling system;

Figure 2      shows an alternative temperature zone of a hydronic heating and/or cooling system; and

Figure 3      shows a block diagram illustrating the method for operating a hydronic heating and/or cooling system.

The invention relates to a method for operating a hydronic heating and/or cooling system. Further on, the present disclosure relates to a control valve for a hydronic heating and/or cooling system and to a hydronic heating and/or cooling system.

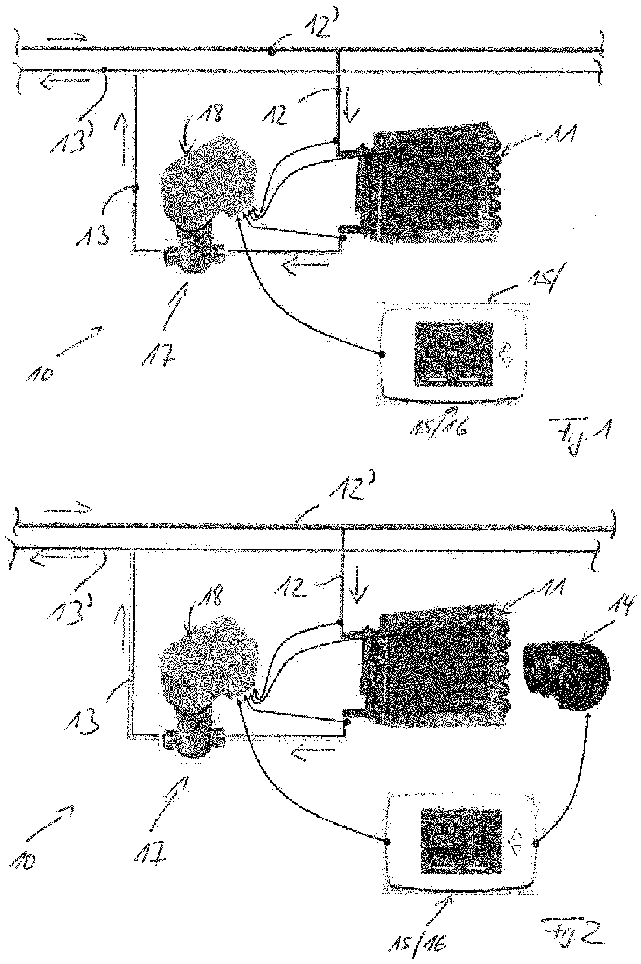

A hydronic heating and/or cooling system comprises a heat/cool source (not shown) providing a liquid heating/cooling medium to multiple temperature zones of the heating and/or cooling system. Figures 1 and 2 both show a temperature zone of such a hydronic heating and/or cooling system.

The temperature zone 10 of Figures 1 and 2 comprises heat exchanger 11. A liquid heating/cooling medium provided by the heat/cool source (not shown) is provided to the heat exchanger 11 by a supply pipe 12, flows through a piping of said heat exchanger 11 and is returned back to the heat/cool source (not shown) by a return pipe 13.

Air flows also though the heat exchanger 11, namely around the piping of said heat exchanger 11. In Figure 2, a fan 14 of the shown temperature zone 10 blows the air through the heat exchanger 11.

The supply pipes 12 of the heat exchangers 11 of the multiple temperature zones 10 of the heating and/or cooling system branch-off from a common supply pipe 12'. The return pipes 13 of the heat exchangers 11 of the multiple temperature zones 10 of the heating and/or cooling system merge with a common return pipe 13' for the multiple temperature zones 10.

Each temperature zone 10 comprises a temperature sensor 15 for measuring an actual value of a zone air temperature of the temperature zone 10. In Figures 1 and 2, said temperature sensor 15 is part of a remote control unit 16 for displaying the actual value of the zone air temperature of the temperature zone 10 and for entering a respective target value of said zone air temperature.

Each temperature zone 10 comprises a control valve 17. The control valve 17 controls the flow of the liquid heating/cooling medium through the heat exchanger 11 in such a way that the actual value of the zone air temperature of the respective temperature zone 10 is adjusted to a target value of the zone air temperature of the respective temperature zone 10. In Figures 1 and 2 the control valve 17 is assigned to the return pipe 13 of the respective heat exchanger 11.

The control valve 17 comprises a valve plunger (not shown) acting together with a valve seat (not shown). The valve position, namely the position of the valve plunger relative to the valve seat, determines the flow of the liquid heating/cooling medium through the control valve 17 and thereby through the heat exchanger 11 of the respective temperature zone 10.

The control valve 17 comprises an electronic control unit 18 controlling the flow of the liquid heating/cooling medium through control valve 17 and thereby through the heat exchanger 11.

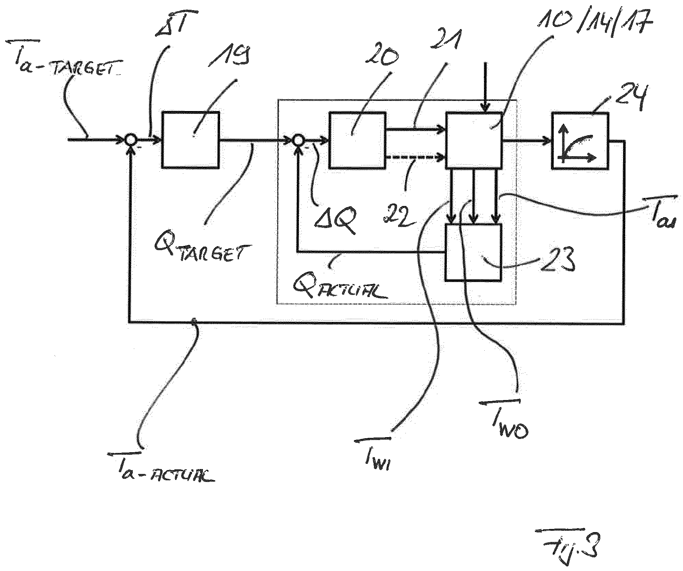

A difference $\Delta T$ between the actual value $T_{a\text{-}ACTUAL}$ of the zone air temperature of the respective temperature zone 10 and the target value $T_{a\text{-}TARGET}$ for the zone air temperature of the respective temperature zone 10 is provided to a first controller 19 (see Figure 3). The first controller 19 is preferably a PID controller. The first controller 19 provides as output variable a signal corresponding to a target relative heating/cooling power request $Q_{TARGET}$ of the heat exchanger 11 of the respective temperature zone 10. The first controller 19 can be part of the electronic control unit 18 of the control valve 17. The first controller 19 can also be part of the remote control unit 16.

An actual relative heating/cooling power request $Q_{ACTUAL}$ for the respective heat exchanger 11 is calculated by a unit 23 on basis of at least three temperature signals, namely at least on basis of the inlet temperature $T_{wi}$ of the liquid heating/cooling medium flowing into the respective heat exchanger 11, on basis of an outlet temperature $T_{wo}$ of the liquid heating/cooling medium flowing out of the respective heat exchanger 11, and on basis of the inlet air temperature $T_{ai}$ of the air flowing into the respective heat exchanger 11, wherein said inlet air temperature $T_{ai}$ corresponds to the actual value $T_{a\text{-}ACTUAL}$ of the zone air temperature. The unit 23 calculating the actual relative heating/cooling power request $Q_{ACTUAL}$ for the respective heat exchanger 11 is preferably part of the electronic controller unit 18 of the control valve 17.

The inlet temperature $T_{wi}$ of the liquid heating/cooling medium flowing into the respective heat exchanger 11 is also called heat exchanger inlet temperature of the liquid heating/cooling medium. The outlet temperature $T_{wo}$ of the liquid heat-ing/cooling medium flowing out of the respective heat exchanger 11 is also called heat exchanger outlet temperature of the liquid heating/cooling medium. The inlet temperature $T_{wi}$ of the liquid heating/cooling medium flowing into the respective heat exchanger 11 is provided a temperature sensor assigned to the inlet pipe 12 of the respective heat exchanger 11. The outlet temperature $T_{wo}$ of the liquid heating/cooling medium flowing out of the respective heat exchanger 11 is provided a further temperature sensor assigned to the return pipe 13 of the respective heat exchanger 11.

The inlet air temperature $T_{ai}$ corresponding to the actual value $T_{a\text{-}ACTUAL}$ of the zone air temperature can be provided by the temperature sensor 15 of the remote control unit 16 or by a further temperature sensor assigned to the respective heat exchanger 11.

A difference $\Delta Q$ between the target relative heating/cooling power request $Q_{TARGET}$ and the actual relative heating/cooling power request $Q_{ACTUAL}$ is provided to a second controller 20, wherein the second controller 20 provides as output variable at least one control variable 21, 22 for the respective temperature zone 10. The second controller 20 is preferably part of the electronic controller unit 18 of the control valve 17.

The second controller 20 provides as output variable 21 at least a control variable for the control valve 17 of the respective temperature zone 10, namely a valve position for the respective control valve 17 thereby adjusting the flow of the liquid heating/cooling medium through the heat exchanger 10. If the temperature zone 10 further comprises a fan 14 (see Figure 2) for blowing the air through the respective heat exchanger 10, the second controller 19 may provide as further output variable 22 a control variable for the fan 14 of the respective temperature zone 10, namely a fan speed for the respective fan 14.

As mentioned above, the actual relative heating/cooling power request $Q_{ACTUAL}$ for the respective heat exchanger 11 is calculated by the unit 23.

Preferably, the unit 23 calculates the actual relative heating/cooling power request for the heat exchanger 11 on basis of the heat exchanger inlet temperature of the liquid medium, on basis of the heat exchanger outlet temperature of the liquid medium and on basis of the heat exchanger inlet air temperature using the following formula:

$$\rho(t) = \frac{T_{wo}(t) - T_{ai}(t)}{T_{wi}(t) - T_{ai}(t)}$$

wherein $T_{wi}$ is the heat exchanger inlet temperature of the liquid medium, wherein $T_{wo}$ is the heat exchanger outlet temperature of the liquid medium, wherein $T_{ai}$ is the heat exchanger inlet air temperature that corresponds to the actual value $T_{a\text{-}ACTUAL}$ of the zone air temperature ($T_{ai} = T_{a\text{-}ACTUAL}$) and wherein $\rho(t)$ corresponds to the actual relative heat-ing/cooling power request $Q_{ACTUAL}$ ($\rho(t) = Q_{ACTUAL}$). The above variables change over the time t.

Alternatively, the actual relative heating/cooling power request for the respective heat exchanger 11 is calculated on basis of the heat exchanger inlet temperature of the liquid medium, on basis of the heat exchanger outlet temperature of the liquid medium, on basis of the heat exchanger inlet air temperature and on basis of the outlet air temperature using the following formula:

$$\xi(t) = \frac{T_{ao}(t) + T_{wo}(t) - 2T_{ai}(t)}{2(T_{wi}(t) - T_{ai}(t))}$$

wherein $T_{wi}$ is the heat exchanger inlet temperature of the liquid medium, wherein $T_{wo}$ is the heat exchanger outlet temperature of the liquid medium, wherein $T_{ai}$ is the heat exchanger inlet air temperature that corresponds to the actual value $T_{a\text{-}ACTUAL}$ of the zone air temperature ($T_{ai} = T_{a\text{-}ACTUAL}$), wherein $T_{ao}$ is the heat exchanger outlet air temperature and wherein $\xi(t)$ corresponds to the actual relative heating/cooling power request $Q_{ACTUAL}$ ($\xi(1) = Q_{ACTUAL}$). The above variables change over the time t.

The heat exchanger outlet air temperature $T_{ao}$ is provided a further temperature sensor assigned to the respective heat exchanger 11.

The block 24 of Figure 3 represents the dynamic behavior of the temperature zone, namely how the heat transfer within the heat exchanger 11 changes the actual value $T_{a\text{-}ACTUAL}$ of the zone air temperature over the time t.

The invention provides overflow avoidance and pressure independent valve control in a hydronic heating and/or cooling system in a simple, cost-effective and reliable way. The invention uses within each temperature zone, namely for each heat exchanger, a valve control valve 17 with an electronic control unit 18 and signals of at least three temperature sensors. The at least three temperature sensors are located on the supply pipe 12 of the respective heat exchanger 11, on the return pipe of the respective heat exchanger 11, and on the air inlet of the respective heat exchanger 11 or on a remote control unit. The control unit 18 of the control valve 17 uses the temperature signals to compute an actual value of a relative heat exchanger power $O_{ACTUAL}$. The control unit 18 of the control valve 17 manipulates the valve position to stabilize the computed relative heat exchanger power $Q_{ACTUAL}$ to the set point $Q_{TARGET}$. This stabilization makes the transferred heat/cool independent to disturbances in a pressure and a temperature of the liquid heating/cooling medium. This invention avoids overflow by limiting the maximum value of the computed relative power $Q_{ACTUAL}$ to a certain value. The invention solves the problems of the overflow and pressure independent valve control without a need for a flow sensor or a complicated mechanical design of the control valve 17.

List of reference signs

| 10 | temperature zone |
| 11 | heat exchanger |
| 12 | supply pipe |
| 12' | common supply pipe |
| 13 | return pipe |
| 13' | common return pipe |
| 14 | fan |
| 15 | temperature sensor |
| 16 | remote control unit |
| 17 | control valve |
| 18 | control unit |
| 19 | controller |
| 20 | controller |
| 21 | control variable |
| 22 | control variable |
| 23 | block |
| 24 | block |

**Claims**

1.  Method for operating a hydronic heating and/or cooling system,

    wherein the hydronic heating and/or cooling system comprises multiple temperature zones (10);
    wherein each temperature zone (10) comprises a heat exchanger (11) with a liquid heating/cooling medium and air flowing through the heat exchanger (11);
    wherein each temperature zone (10) comprises a temperature sensor (15) for measuring an actual value of a zone air temperature;
    wherein each temperature zone (10) comprises a control valve (17) controlling the flow of the liquid heating/cooling medium through the heat exchanger (11) in such a way that the actual value of the zone air temperature is adjusted to a target value of the zone air temperature;
    **characterized in that**
    a difference between the actual value and the target value of the respective zone air temperature is provided to a first controller (19), wherein the first controller (19) provides as output variable a signal corresponding to a target relative heating/cooling power request of the heat exchanger (11) of the respective temperature zone (10);
    an actual relative heating/cooling power request for the respective heat exchanger (11) is calculated on basis of at least three temperature signals, namely at least on basis of the heat exchanger inlet temperature of the liquid heating/cooling medium, on basis of the heat exchanger outlet temperature of the liquid heating/cooling medium and on basis of the heat exchanger inlet air temperature corresponding to the actual value of the zone air temperature;
    a difference between the target relative heating/cooling power request and the actual relative heating/cooling power request is provided to a second controller (20), wherein the second controller (20) provides as output variable at least one control variable for the respective temperature zone (10).

2.  Method as claimed in claim 1, **characterized in that** the second controller (20) provides as output variable a control variable for the control valve (17) of the respective temperature zone (10), namely a valve position for the respective control valve (17) thereby setting the flow of the liquid heating/cooling medium through the heat exchanger (11).

3.  Method as claimed in claim 1 or 2, **characterized in that** each temperature zone (10) further comprises a fan (14) for blowing the air through the respective heat exchanger (11), and that the second controller (20) provides as additional output variable control variable for the fan (14) of the respective temperature zone (10), namely a fan sped for the respective fan (14).

4.  Method as claimed in one of claims 1 to 3, **characterized in that** the actual relative heating/cooling power request p(t) for the respective heat exchanger (10) is calculated on basis the heat exchanger inlet temperature of the liquid heating/cooling medium, on basis of the heat exchanger outlet temperature of the liquid heating/cooling medium and on basis of the heat exchanger inlet air temperature using the following formula:

$$\rho(t) = \frac{T_{wo}(t) - T_{ai}(t)}{T_{wi}(t) - T_{ai}(t)}$$

    wherein $T_{wi}$ is the heat exchanger inlet temperature of the liquid heating/cooling medium, wherein $T_{wo}$ is the heat exchanger outlet temperature of the liquid heating/cooling medium, and wherein $T_{ai}$ is the heat exchanger inlet air temperature corresponding to the actual value of the zone air temperature.

5.  Method as claimed in one of claims 1 to 3, **characterized in that** the actual relative heating/cooling power request $\xi(t)$ for the respective heat exchanger (11) is calculated on basis of the heat exchanger inlet temperature of the liquid heating/cooling medium, on basis of the heat exchanger outlet temperature of the liquid heating/cooling medium, on basis of the heat exchanger inlet air temperature and on basis of the heat exchanger outlet air temperature using the following formula:

$$\xi(t) = \frac{T_{ao}(t) + T_{wo}(t) - 2T_{ai}(t)}{2(T_{wi}(t) - T_{ai}(t))}$$

wherein $T_{wi}$ is the heat exchanger inlet temperature of the liquid heating/cooling medium, wherein $T_{wo}$ is the heat exchanger outlet temperature of the liquid heating/cooling medium, wherein $T_{ai}$ is the heat exchanger inlet air temperature corresponding to the actual value of the zone air temperature, and wherein $T_{ao}$ is the heat exchanger outlet air temperature.

6. Control valve (17) for a heat exchanger of a temperature zone (10) of a hydronic heating and/or cooling system, comprising:

a control unit (18) being arranged for determining as output variable at least one control variable, namely at least a valve position for the control valve, wherein said valve position adjusts a flow of the liquid heating/cooling medium though the control valve (17); **characterized in that**
the control unit (18) comprises a first controller (19) and a second controller (20),
the first controller (19) is arranged for being provided with a difference between an actual value and a target value of a zone air temperature and for providing as output variable a signal corresponding to a target relative heating/cooling power request of the heat exchanger (11),
the second controller (20) is arranged for determining the or each control variable on basis of a difference between an actual relative heating/cooling power request of the heat exchanger and the target relative heating/cooling power request of the heat exchanger;
the control unit (18) is arranged for calculating the actual relative heating/cooling power request for the heat exchanger on basis of at least three temperature signals, namely at least on basis of the heat exchanger inlet temperature of the liquid heating/cooling medium, on basis of the heat exchanger outlet temperature of the liquid heating/cooling medium and on basis of a heat exchanger inlet air temperature.

7. Control valve as claimed in claim 6, **characterized in that** the control unit (18) is arranged for calculating the actual relative heating/cooling power request p(t) for the heat exchanger on basis the heat exchanger inlet temperature of the liquid heating/cooling medium, on basis of the heat exchanger outlet temperature of the liquid heating/cooling medium and on basis of the heat exchanger inlet air temperature using the following formula:

$$\rho(t) = \frac{T_{wo}(t) - T_{ai}(t)}{T_{wi}(t) - T_{ai}(t)}$$

wherein $T_{wi}$ is the heat exchanger inlet temperature of the liquid heating/cooling medium, wherein $T_{wo}$ is the heat exchanger outlet temperature of the liquid heating/cooling medium, and wherein $T_{ai}$ is the heat exchanger inlet air temperature.

8. Control valve as claimed in claim 6, **characterized in that** the control unit (18) is arranged for calculating the actual relative heating/cooling power request $\xi(t)$ for the respective heat exchanger on basis of the heat exchanger inlet temperature of the liquid heating/cooling medium, on basis of the heat exchanger outlet temperature of the liquid heating/cooling medium, on basis of the heat exchanger inlet air temperature and on basis of the heat exchanger outlet air temperature using the following formula:

$$\xi(t) = \frac{T_{ao}(t) + T_{wo}(t) - 2T_{ai}(t)}{2(T_{wi}(t) - T_{ai}(t))}$$

wherein $T_{wi}$ is the heat exchanger inlet temperature of the liquid heating/cooling medium, wherein $T_{wo}$ is the heat exchanger outlet temperature of the liquid heating/cooling medium, wherein $T_{ai}$ is the heat exchanger inlet air

temperature, and wherein $T_{ao}$ is the heat exchanger outlet air temperature.

9. Control valve as claimed in one of claims 6 to 8, **characterized in that** the second controller (20) of the control unit (18) is arranged for determining as additional output variable a fan speed for a fan of the heat exchanger.

10. Hydronic heating and/or cooling system, comprising a heat/cool source providing a liquid heating/cooling medium to multiple temperature zones (10) of the heating and/or cooling system;

   wherein each temperature zone (10) comprises a heat exchanger (11) with liquid heating/cooling medium and air flowing through the heat exchanger (11), said heat exchanger (11) being connected to the heat/cool source by a supply pipe (12) and a return pipe (13), namely to a common supply pipe (12') and a common return pipe (13') to which the heat exchangers (11) of multiple temperature zones are connected;
   wherein each temperature zone (10) comprises a temperature sensor (15) for measuring an actual value of a zone air temperature;
   wherein each temperature zone (10) comprises control valve (17) controlling the flow of the liquid heating/cooling medium through the heat exchanger (11) in such a way that the actual value of the zone air temperature is adjusted to a target value of the zone air temperature;
   **characterized in that**
   each control valve (17) is provided by a control valve of one of claims 6 to 9.

**Patentansprüche**

1. Verfahren zum Betreiben eines hydronischen Heiz- und/oder Kühlsystems,

   wobei das hydronische Heiz- und/oder Kühlsystem mehrere Temperaturzonen (10) umfasst;
   wobei jede Temperaturzone (10) einen Wärmetauscher (11) mit einem flüssigen Heiz-/Kühlmedium und Luft umfasst, die durch den Wärmetauscher (11) strömt;
   wobei jede Temperaturzone (10) einen Temperatursensor (15) zum Messen eines Istwerts einer Zonenlufttemperatur umfasst;
   wobei jede Temperaturzone (10) ein Regelventil (17) umfasst, das den Fluss des flüssigen Heiz-/Kühlmediums durch den Wärmetauscher (11) derart regelt, dass der Istwert der Zonenlufttemperatur auf einen Zielwert der Zonenlufttemperatur eingestellt wird;
   **dadurch gekennzeichnet, dass**
   eine Differenz zwischen dem Istwert und dem Zielwert der jeweiligen Zonenlufttemperatur einem ersten Regler (19) bereitgestellt wird, wobei der erste Regler (19) als Ausgangsvariable ein Signal entsprechend einem relativen Ziel-Heiz-/Kühlleistungsbedarf des Wärmetauschers (11) der jeweiligen Temperaturzone (10) bereitstellt;
   ein relativer Ist-Heiz-/Kühlleistungsbedarf für den jeweiligen Wärmetauscher (11) auf Basis von mindestens drei Temperatursignalen berechnet wird, nämlich mindestens auf Basis der Wärmetauschereinlasstemperatur des flüssigen Heiz-/Kühlmediums, auf Basis der Wärmetauscherauslasstemperatur des flüssigen Heiz-/Kühlmediums und auf Basis der Wärmetauschereinlasslufttemperatur entsprechend dem Istwert der Zonenlufttemperatur;
   eine Differenz zwischen dem relativen Ziel-Heiz-/Kühlleistungsbedarf und dem relativen Ist-Heiz-/Kühlleistungsbedarf einem zweiten Regler (20) bereitgestellt wird, wobei der zweite Regler (20) als Ausgangsvariable mindestens eine Stellgröße für die jeweilige Temperaturzone (10) bereitstellt.

2. Verfahren nach Anspruch 1, **dadurch gekennzeichnet, dass** der zweite Regler (20) als Ausgangsvariable eine Stellgröße für das Regelventil (17) der jeweiligen Temperaturzone (10) bereitstellt, nämlich eine Ventilposition für das jeweilige Regelventil (17), wodurch der Fluss des flüssigen Heiz-/Kühlmediums durch den Wärmetauscher (11) eingestellt wird.

3. Verfahren nach Anspruch 1 oder 2, **dadurch gekennzeichnet, dass** jede Temperaturzone (10) ferner ein Gebläse (14) zum Blasen der Luft durch den jeweiligen Wärmetauscher (11) umfasst und dass der zweite Regler (20) als zusätzliche Ausgangsvariable eine Stellgröße für das Gebläse (14) der jeweiligen Temperaturzone (10) bereitstellt, nämlich eine Lüftergeschwindigkeit für das jeweilige Gebläse (14).

4. Verfahren nach einem der Ansprüche 1 bis 3, **dadurch gekennzeichnet, dass** der relative Ist-Heiz-/Kühlleistungsbedarf $p(t)$ für den jeweiligen Wärmetauscher (10) auf Basis der Wärmetauschereinlasstemperatur des flüssigen Heiz-/Kühlmediums, auf Basis der Wärmetauscherauslasstemperatur des flüssigen Heiz-/Kühlmediums und auf Basis der Wärmetauschereinlasslufttemperatur unter Verwendung der folgenden Formel berechnet wird:

$$\rho(t) = \frac{T_{wo}(t) - T_{ai}(t)}{T_{wi}(t) - T_{ai}(t)}$$

wobei $T_{wi}$ die Wärmetauschereinlasstemperatur des flüssigen Heiz-/Kühlmediums ist, wobei $T_{wo}$ die Wärmetauscherauslasstemperatur des flüssigen Heiz-/Kühlmediums ist und wobei $T_{ai}$ die Wärmetauschereinlasslufttemperatur entsprechend dem Istwert der Zonenlufttemperatur ist.

5.  Verfahren nach einem der Ansprüche 1 bis 3, **dadurch gekennzeichnet, dass** der relative Ist-Heiz-/Kühlleistungsbedarf $\xi(t)$ für den jeweiligen Wärmetauscher (11) auf Basis der Wärmetauschereinlasstemperatur des flüssigen Heiz-/Kühlmediums, auf Basis der Wärmetauscherauslasstemperatur des flüssigen Heiz-/Kühlmediums, auf Basis der Wärmetauschereinlasslufttemperatur und auf Basis der Wärmetauscherauslasslufttemperatur unter Verwendung der folgenden Formel berechnet wird:

$$\xi(t) = \frac{T_{ao}(t) + T_{wo}(t) - 2T_{ai}(t)}{2(T_{wi}(t) - T_{ai}(t))}$$

wobei $T_{wi}$ die Wärmetauschereinlasstemperatur des flüssigen Heiz-/Kühlmediums ist, wobei $T_{wo}$ die Wärmetauscherauslasstemperatur des flüssigen Heiz-/Kühlmediums ist, wobei $T_{ai}$ die Wärmetauschereinlasslufttemperatur entsprechend dem Istwert der Zonenlufttemperatur ist und wobei $T_{ao}$ die Wärmetauscherauslasslufttemperatur ist.

6.  Regelventil (17) für einen Wärmetauscher einer Temperaturzone (10) eines hydronischen Heiz- und/oder Kühlsystems, umfassend:

eine Regeleinheit (18), die dazu angeordnet ist, als Ausgangsvariable mindestens eine Stellgröße zu bestimmen, nämlich mindestens eine Ventilposition für das Regelventil, wobei die Ventilposition einen Fluss des flüssigen Heiz-/Kühlmediums durch das Regelventil (17) einstellt; **dadurch gekennzeichnet, dass**
die Regeleinheit (18) einen ersten Regler (19) und einen zweiten Regler (20) umfasst,
der erste Regler (19) dazu angeordnet ist, mit einer Differenz zwischen einem Istwert und einem Zielwert einer Zonenlufttemperatur bereitgestellt zu werden und als Ausgangsvariable ein Signal entsprechend einem relativen Ziel-Heiz-/Kühlleistungsbedarf des Wärmetauschers (11) bereitzustellen,
der zweite Regler (20) dazu angeordnet ist, die oder jede Stellgröße auf Basis einer Differenz zwischen einem relativen Ist-Heiz-/Kühlleistungsbedarf des Wärmetauschers und dem relativen Ziel-Heiz-/Kühlleistungsbedarf des Wärmetauschers zu bestimmen;
die Regeleinheit (18) dazu angeordnet ist, den relativen Ist-Heiz-/Kühlleistungsbedarf für den Wärmetauscher auf Basis von mindestens drei Temperatursignalen zu berechnen, nämlich mindestens auf Basis der Wärmetauschereinlasstemperatur des flüssigen Heiz-/Kühlmediums, auf Basis der Wärmetauscherauslasstemperatur des flüssigen Heiz-/Kühlmediums und auf Basis einer Wärmetauschereinlasslufttemperatur.

7.  Regelventil nach Anspruch 6, **dadurch gekennzeichnet, dass** die Regeleinheit (18) dazu angeordnet ist, den relativen Ist-Heiz-/Kühlleistungsbedarf $p(t)$ für den Wärmetauscher auf Basis der Wärmetauschereinlasstemperatur des flüssigen Heiz-/Kühlmediums, auf Basis der Wärmetauscherauslasstemperatur des flüssigen Heiz-/Kühlmediums und auf der Basis der Wärmetauschereinlasslufttemperatur unter Verwendung der folgenden Formel zu berechnen:

$$\rho(t) = \frac{T_{wo}(t) - T_{ai}(t)}{T_{wi}(t) - T_{ai}(t)}$$

wobei $T_{wi}$ die Wärmetauschereinlasstemperatur des flüssigen Heiz-/Kühlmediums ist, wobei $T_{wo}$ die Wärmetauscherauslasstemperatur des flüssigen Heiz-/Kühlmediums ist und wobei $T_{ai}$ die Wärmetauschereinlasslufttemperatur ist.

8. Regelventil nach Anspruch 6, **dadurch gekennzeichnet, dass** die Regeleinheit (18) dazu angeordnet ist, den relativen Ist-Heiz-/Kühlleistungsbedarf $\xi(t)$ für den jeweiligen Wärmetauscher auf Basis der Wärmetauschereinlasstemperatur des flüssigen Heiz-/Kühlmediums, auf Basis der Wärmetauscherauslasstemperatur des flüssigen Heiz-/Kühlmediums, auf Basis der Wärmetauschereinlasslufttemperatur und auf Basis der Wärmetauscherauslasslufttemperatur unter Verwendung der folgenden Formel zu berechnen:

$$\xi(t) = \frac{T_{ao}(t) + T_{wo}(t) - 2T_{ai}(t)}{2\left(T_{wi}(t) - T_{ai}(t)\right)}$$

wobei $T_{wi}$ die Wärmetauschereinlasstemperatur des flüssigen Heiz-/Kühlmediums ist, wobei $T_{wo}$ die Wärmetauscherauslasstemperatur des flüssigen Heiz-/Kühlmediums ist, wobei $T_{ai}$ die Wärmetauschereinlasslufttemperatur ist und wobei $T_{ao}$ ist die Wärmetauscherauslasslufttemperatur ist.

9. Regelventil nach einem der Ansprüche 6 bis 8, **dadurch gekennzeichnet, dass** der zweite Regler (20) der Regeleinheit (18) dazu angeordnet ist, als zusätzliche Ausgangsvariable eine Gebläsedrehzahl für ein Gebläse des Wärmetauschers zu bestimmen.

10. Hydronisches Heiz- und/oder Kühlsystem, umfassend eine Heiz-/Kühlquelle, die ein flüssiges Heiz-/Kühlmedium für mehrere Temperaturzonen (10) des Heiz- und/oder Kühlsystems bereitstellt;

wobei jede Temperaturzone (10) einen Wärmetauscher (11) mit flüssigem Heiz-/Kühlmedium und Luft umfasst, die durch den Wärmetauscher (11) strömt, wobei der Wärmetauscher (11) mit der Heiz-/Kühlquelle durch ein Vorlaufrohr (12) und ein Rücklaufrohr (13) verbunden ist, nämlich mit einem gemeinsamen Vorlaufrohr (12') und einem gemeinsamen Rücklaufrohr (13'), an die die Wärmetauscher (11) mehrerer Temperaturzonen angeschlossen sind;
wobei jede Temperaturzone (10) einen Temperatursensor (15) zum Messen eines Istwerts einer Zonenlufttemperatur umfasst;
wobei jede Temperaturzone (10) ein Regelventil (17) umfasst, das den Fluss des flüssigen Heiz-/Kühlmediums durch den Wärmetauscher (11) derart regelt, dass der Istwert der Zonenlufttemperatur auf einen Zielwert der Zonenlufttemperatur eingestellt wird;
**dadurch gekennzeichnet, dass**
jedes Regelventil (17) durch ein Regelventil nach einem der Ansprüche 6 bis 9 bereitgestellt ist.

**Revendications**

1. Procédé pour faire fonctionner un système de chauffage et/ou de refroidissement hydronique,

dans lequel le système de chauffage et/ou de refroidissement hydronique comprend de multiples zones de température (10) ;
dans lequel chaque zone de température (10) comprend un échangeur de chaleur (11) avec un milieu de chauffage/refroidissement liquide et de l'air circulant à travers l'échangeur de chaleur (11) ;
dans lequel chaque zone de température (10) comprend un capteur de température (15) pour mesurer une valeur réelle d'une température de l'air de la zone ;
dans lequel chaque zone de température (10) comprend une vanne de régulation (17) régulant le débit du milieu de chauffage/refroidissement liquide à travers l'échangeur de chaleur (11), de sorte que la valeur réelle de la température de l'air de la zone soit ajustée à une valeur cible de la température de l'air de la zone ;
**caractérisé en ce que**
une différence entre la valeur réelle et la valeur cible de la température de l'air de la zone respective est fournie à un premier régulateur (19), dans lequel le premier régulateur (19) fournit, comme variable de sortie, un signal correspondant à une demande de puissance de chauffage/refroidissement relative cible de l'échangeur de chaleur (11) de la zone de température respective (10) ;
une demande de puissance de chauffage/refroidissement relative réelle pour l'échangeur de chaleur (11) respectif est calculée sur la base d'au moins trois signaux de température, à savoir au moins sur la base de la température d'entrée de l'échangeur de chaleur du milieu de chauffage/refroidissement liquide, sur la base de la température de sortie de l'échangeur de chaleur du milieu de chauffage/refroidissement liquide et sur la base de la température de l'air d'entrée de l'échangeur de chaleur correspondant à la valeur réelle de la température de l'air de la zone ;
une différence entre la demande de puissance de chauffage/refroidissement relative cible et la demande de puissance de chauffage/refroidissement relative réelle est fournie à un second régulateur (20), dans lequel le second régulateur (20) fournit, comme variable de sortie, au moins une variable de régulation pour la zone de température (10) respective.

2. Procédé selon la revendication 1, **caractérisé en ce que** le second régulateur (20) fournit, comme variable de sortie, une variable de régulation pour la vanne de régulation (17) de la zone de température (10) respective, à savoir une position de vanne pour la vanne de régulation (17) respective, établissant ainsi le flux du milieu de chauffage/refroidissement liquide à travers l'échangeur de chaleur (11).

3. Procédé selon la revendication 1 ou 2, **caractérisé en ce que** chaque zone de température (10) comprend en outre un ventilateur (14) pour souffler l'air à travers l'échangeur de chaleur (11) respectif et que le second régulateur (20) fournit, comme sortie supplémentaire, une variable de régulation variable pour le ventilateur (14) de la zone de température (10) respective, à savoir une vitesse de ventilateur pour le ventilateur (14) respectif.

4. Procédé selon l'une des revendications 1 à 3, **caractérisé en ce que** la demande de puissance de chauffage/refroidissement relative réelle $\rho(t)$ pour l'échangeur de chaleur (10) respectif est calculée sur la base de la température d'entrée de l'échangeur de chaleur du milieu de chauffage/refroidissement liquide, sur la base de la température de sortie de l'échangeur de chaleur du milieu de chauffage/refroidissement liquide et sur la base de la température de l'air d'entrée de l'échangeur de chaleur à l'aide de la formule suivante :

$$\rho(t) = \frac{T_{wo}(t) - T_{ai}(t)}{T_{wi}(t) - T_{ai}(t)}$$

dans laquelle $T_{wi}$ est la température d'entrée de l'échangeur de chaleur du milieu de chauffage/refroidissement liquide, dans lequel $T_{wo}$ est la température de sortie de l'échangeur de chaleur du milieu de chauffage/refroidissement liquide et dans lequel $T_{ai}$ est la température de l'air d'entrée de l'échangeur de chaleur correspondant à la valeur réelle de la température de l'air de la zone.

5. Procédé selon l'une des revendications 1 à 3, **caractérisé en ce que** la demande de puissance de chauffage/refroidissement relative réelle $\xi(t)$ pour l'échangeur de chaleur (11) respectif est calculée sur la base de la température d'entrée de l'échangeur de chaleur du milieu de chauffage/refroidissement liquide, sur la base de la température de sortie de l'échangeur de chaleur du milieu de chauffage/refroidissement liquide, sur la base de la température de l'air d'entrée de l'échangeur de chaleur et sur la base de la température de l'air de sortie de l'échangeur de chaleur à l'aide de la formule suivante :

$$\xi(t) = \frac{T_{ao}(t) + T_{wo}(t) - 2T_{ai}(t)}{2(T_{wi}(t) - T_{ai}(t))}$$

dans laquelle $T_{wi}$ est la température d'entrée de l'échangeur de chaleur du milieu de chauffage/refroidissement liquide, dans lequel $T_{wo}$ est la température de sortie de l'échangeur de chaleur du milieu de chauffage/refroidissement liquide, dans lequel $T_{ai}$ est la température de l'air d'entrée de l'échangeur de chaleur correspondant à la valeur réelle de la température de l'air de la zone et dans lequel $T_{ao}$ est la température de l'air de sortie de l'échangeur de chaleur.

**6.** Vanne de régulation (17) pour un échangeur de chaleur d'une zone de température (10) d'un système de chauffage et/ou de refroidissement hydronique, comprenant :

une unité de régulation (18) agencée pour déterminer, comme variable de sortie, au moins une variable de régulation, à savoir au moins une position de vanne pour la vanne de régulation, dans laquelle ladite position de vanne ajuste un débit du milieu de chauffage/refroidissement liquide à travers la vanne de régulation (17) ;
**caractérisée en ce que**
l'unité de régulation (18) comprend un premier régulateur (19) et un second régulateur (20),
le premier régulateur (19) est agencé pour recevoir une différence entre une valeur réelle et une valeur cible d'une température de l'air de la zone et pour fournir, comme variable de sortie, un signal correspondant à une demande de puissance de chauffage/refroidissement relative cible de l'échangeur de chaleur (11),
le second régulateur (20) est agencé pour déterminer la ou chaque variable de régulation sur la base d'une différence entre une demande de puissance de chauffage/refroidissement relative réelle de l'échangeur de chaleur et la demande de puissance de chauffage/refroidissement relative cible de l'échangeur de chaleur ;
l'unité de régulation (18) est agencée pour calculer la demande de puissance de chauffage/refroidissement relative réelle pour l'échangeur de chaleur sur la base d'au moins trois signaux de température, à savoir au moins sur la base de la température d'entrée de l'échangeur de chaleur du milieu de chauffage/refroidissement liquide, sur la base de la température de sortie de l'échangeur de chaleur du milieu de chauffage/refroidissement liquide et sur la base d'une température de l'air d'entrée de l'échangeur de chaleur.

**7.** Vanne de régulation selon la revendication 6, **caractérisée en ce que** l'unité de régulation (18) est agencée pour calculer la demande de puissance de chauffage/refroidissement relative réelle $\rho(t)$ pour l'échangeur de chaleur sur la base de la température d'entrée de l'échangeur de chaleur du milieu de chauffage/refroidissement liquide, sur la base de la température de sortie de l'échangeur de chaleur du milieu de chauffage/refroidissement liquide et sur la base de la température de l'air d'entrée de l'échangeur de chaleur à l'aide de la formule suivante :

$$\rho(t) = \frac{T_{wo}(t) - T_{ai}(t)}{T_{wi}(t) - T_{ai}(t)}$$

dans laquelle $T_{wi}$ est la température d'entrée de l'échangeur de chaleur du milieu de chauffage/refroidissement liquide, dans laquelle $T_{wo}$ est la température de sortie de l'échangeur de chaleur du milieu de chauffage/refroidissement liquide et dans laquelle $T_{ai}$ est la température de l'air d'entrée de l'échangeur de chaleur.

**8.** Vanne de régulation selon la revendication 6, **caractérisée en ce que** l'unité de régulation (18) est agencée pour calculer la demande de puissance de chauffage/refroidissement relative réelle $\xi(t)$ pour l'échangeur de chaleur respectif sur la base de la température d'entrée de l'échangeur de chaleur du milieu de chauffage/refroidissement liquide, sur la base de la température de sortie de l'échangeur de chaleur du milieu de chauffage/refroidissement liquide, sur la base de la température de l'air d'entrée de l'échangeur de chaleur et sur la base de la température de l'air de sortie de l'échangeur de chaleur à l'aide de la formule suivante :

$$\xi(t) = \frac{T_{ao}(t) + T_{wo}(t) - 2T_{ai}(t)}{2(T_{wi}(t) - T_{ai}(t))}$$

dans laquelle $T_{wi}$ est la température d'entrée de l'échangeur de chaleur du milieu de chauffage/refroidissement liquide, dans laquelle $T_{wo}$ est la température de sortie de l'échangeur de chaleur du milieu de chauffage/refroidissement liquide, dans laquelle $T_{ai}$ est la température de l'air d'entrée de l'échangeur de chaleur et dans laquelle $T_{ao}$ est la température de l'air de sortie de l'échangeur de chaleur.

**9.** Vanne de régulation selon l'une des revendications 6 à 8, **caractérisée en ce que** le second régulateur (20) de l'unité de régulation (18) est agencé pour déterminer, comme variable de sortie supplémentaire, une vitesse de ventilateur pour un ventilateur de l'échangeur de chaleur.

**10.** Système de chauffage et/ou de refroidissement hydronique, comprenant une source de chaleur/froid fournissant un milieu de chauffage/refroidissement liquide à plusieurs zones de température (10) du système de chauffage et/ou de refroidissement ;

dans lequel chaque zone de température (10) comprend un échangeur de chaleur (11) avec un milieu de chauffage/refroidissement liquide et de l'air circulant à travers l'échangeur de chaleur (11), ledit échangeur de chaleur (11) étant relié à la source de chaleur/froid par un tuyau d'alimentation (12) et un tuyau de retour (13), à savoir un tuyau d'alimentation commun (12') et un tuyau de retour commun (13') auxquels les échangeurs de chaleur (11) de plusieurs zones de température sont reliés ;

dans lequel chaque zone de température (10) comprend un capteur de température (15) pour mesurer une valeur réelle d'une température de l'air de la zone ;

dans lequel chaque zone de température (10) comprend une vanne de régulation (17) régulant le débit du milieu de chauffage/refroidissement liquide à travers l'échangeur de chaleur (11), de sorte que la valeur réelle de la température de l'air de la zone soit ajustée à une valeur cible de la température de l'air de la zone ;

**caractérisé en ce que**

chaque vanne de régulation (17) est prévue comme étant une vanne de régulation selon l'une des revendications 6 à 9.

Fig. 1

Fig. 2

$T_{a-TARGET}$    $\Delta T$    19    20    21    10/14/17    24

$Q_{TARGET}$    $\Delta Q$    22    23    $T_{aI}$

$Q_{ACTUAL}$

$T_{a-ACTUAL}$    $T_{WI}$    $T_{WO}$

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009218088 A1